# EUROPEAN PATENT APPLICATION

(11) **EP 1 508 857 A1**
(43) Date of publication of application: **23.02.2005**
(21) Application number: 02733237.8
(22) Date of filing: 29.05.2002
(51) Int. Cl.: G06F 11/22

(54) **SIGNAL PROCESSOR**

(71) Applicant: MITSUBISHI DENKI KABUSHIKI KAISHA, Tokyo 100-8310 (JP)
(72) Inventor: TOMOE, Naohito Mitsubishi Denki Kabushiki Kaisha, Chiyoda-ku, Tokyo 100-8310 (JP); TANAKA, Toyohisa Mitsubishi Denki Kabushiki Kaisha, Chiyoda-ku, Tokyo 100-8310 (JP); OBASE, Yoshihiro Mitsubishi Denki Kabushiki Kaisha, Chiyoda-ku, Tokyo 100-8310 (JP)
(74) Representative: Sajda, Wolf E., Dipl.-Phys.
(86) International application number: PCT/JP2002/005186
(87) International publication number: WO 2003/100615

(57) **Abstract**

A signal processor for a mobile communication system including a plurality of function blocks for signal processing directed to facilitating debugging. A signal processor (100) includes primary function blocks such as an error correction coder block (102), a modulator block (104), a demodulator block (202), an error correction decoder block (204), and an MPU (302). More particularly, the signal processor (100) outputs debug information in an arbitrary data length along with time information serially from an arbitrary function block, based on an instruction from an outside, through signal lines (404(1)~404(I), 404(1)~404(J), 404(1)~404(K), 404(1)~404(L)) connected to each function block, a selection multiplex output block (403), and a selection multiplex output signal line (402). Hence, a debugger (401) specifies a function block where a failure occurs and specifies the timing of a failure occurrence.

## Description

### Technical Field

The present invention relates to a signal processor for a mobile communication system including a plurality of function blocks for signal processing such as modulation, demodulation, error correction coding and error correction decoding, and is directed to facilitating debugging. More particularly, the present invention relates to the configuration of the signal processor and the operation of an external debugger.

### Background Art

Debugging for a signal processor for a mobile communication system including a plurality of function blocks for signal processing such as modulation, demodulation, error correction coding and error correction decoding will be discussed. With debugging, it is often required to read data from the memory of an arbitrary function block in order to specify the location of a failure in the signal processor. This memory is provided inside or outside the function block. Normally, a memory read of this case is carried out via an MPU (Micro Processing Unit).

However, in some cases, a required amount of information for debugging is not available with limited capacity of this type of memory, thereby causing insufficiency of debug information.

Another problem is that the timing of a failure occurrence is difficult to specify.

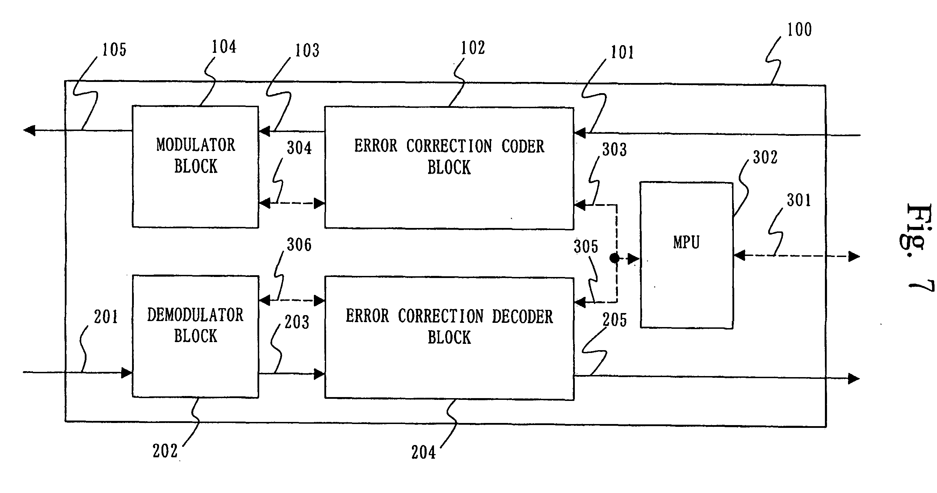

A description will now be given of the configuration of a conventional signal processor and its operation. Fig. 7 is a diagram showing the configuration of a conventional signal processor.

A reference numeral 100 denotes a signal processor for a mobile communication system. The signal processor 1000 is configured with a transmitter block and a receiver block.

The transmitter block has an error correction coder block 102 and a modulator block 104.

The error correction coder block 102 performs error correction coding, which is the signal processing that allows correcting an error bit produced in wireless transmission, for transmission data 101 for coding as the input data. The error correction coder block 102 outputs a coded data series 103. Error bit correction is necessary for improving line quality in wireless transmission.

The modulator block 104 modulates the coded data series 103 as the input data so as to convert the coded data series 103 and obtain modulated transmission data 105. The modulator block 104 then outputs the modulated transmission data 105. The modulated transmission data 105 is transmitted via a wireless transmission channel. Modulation is implemented to reduce the interference effect of jamming or change of transmission channel.

The receiver block has a demodulator block 202 and an error correction decoder block 204.

The demodulator block 202 demodulates received modulated data 201, which is received via the wireless transmission channel, as the input data so as to convert the received modulated data 201 to obtain a demodulated data series 203. The demodulator block 202 then outputs the demodulated data series 203. Demodulation, which is an inverse transform process of modulation, is a data restoration process.

The error correction decoder block 204 performs error correction decoding for the demodulated data series 203 as the input data so as to correct an error bit produced by deterioration in line quality in wireless transmission. The error correction decoder block 204 then outputs decoded data 205 that is obtained through the correction.

The error correction coder block 102, the modulator block 104, the demodulator block 202, and the error correction decoder block 204 are configured as function blocks. Those function blocks include devices such as DSP (Digital Signal Processor), LSI (Large Scale Integration), and FPGA (Field Programmable Gate Array). Also, those function blocks operate in various operation modes when controlled by MPU (Micro Processing Block) 302.

For example, with a CDMA (Code Division Multiple Access) based signal processor, wireless channel information about such as spreading code is transmitted to the modulator block 104 and the demodulator block 202 as the operation modes. Also with the coding system, if the mobile communication system is based both on convolution coding and Turbo coding, information about such as coding system and coding rate is transmitted to the error correction coder block 102 and the error correction decoder block 204 as the operation modes.

An explanation will be given of paths for transmitting the information. If the transmission is made from an MPU 302 to the error correction coder block 102, an input/output signal line 303 is used. If the transmission is made from the MPU 302 to the error correction decoder block 204, an input/output signal line 305 is used. If an operation mode is transmitted from the MPU 302 to the modulator block 104, then the input/output signal line 303, the error correction coder block 102 and the input/output signal line 304 are used. If an operation mode is transmitted from the MPU 302 to the demodulator block 202, then the input/output signal line 305, the error correction decoder block 204, and an input/output signal line 306 are used.

The signal processor for a mobile communication system is thus configured with the function blocks having various types of operation modes combined in a complicated manner. In the event a failure occurs in such a signal processor, a necessity occurs to specify a function block as a failure factor. The failure is a phenomenon such as the modulated transmission data 105 or the decoded data 205 do not match with data assumed, for example. To specify a function block as a failure factor, a human analyzer acquires debug information such as the input data and/or output data of an arbitrary function block using an externally provided debugger. This allows specifying the function blocks.

Thus, if the debug information is acquired from outside the conventional signal processor of Fig. 7, the MPU 302 is instructed from an outside via the input/output signal line 301 connected with the MPU 302 to perform a memory read for the debug information such as the input data and/or output data of an arbitrary function block. The MPU 302, in response to this instruction, reads the debug information such as the input data and/or output data required from the memory provided inside or outside an arbitrary function block using the input/output signal lines 303-306 that are also used for transmitting the operation modes. Then, the MPU 302 outputs retrieved debug information using the input/output signal line 301.

However, as the symbol rate handled by the signal processor gets higher and the functions become more complicated, the amount of information required for debugging shall increase. In the meantime, the capacity of a memory provided inside or outside the function block is limited. This poses the problem of failing to secure a sufficient amount of information for debugging.

In the case of using CFN (Connection Frame Number) for synchronizing between UE (User Equipment) and UTRAN (UMTS Terrestrial Radio Access Network) like a mobile communication system based on W-CDMA that is prescribed by 3GPP (3rd Generation Partnership Project), the operation mode of the signal processor changes according to the timing of CFN, which is a frame counter of 0~255. Then, corresponding to this change, a failure may occur.

Another problem is, with a failure thus occurred, it is difficult, unless the debug information carries time information, to specify the timing of occurrence of the failure and the factor thereof.

### Disclosure of the Invention

A signal processor according to the present invention is characterized by including:
(1) a plurality of function blocks for signal processing; and
(2) a dedicated output path for transmitting debug information for debugging for the signal processor obtained from each of the plurality of function blocks.

The dedicated output path is characterized by transmitting the debug information serially.

The debug information is characterized by including input data to at least one of the plurality of function blocks.

The debug information is characterized by including output data from at least one of the plurality of function blocks.

The debug information is characterizes by being data in an arbitrary length (size).

The signal processor is characterized by being designed for a mobile communication system, ant one of the plurality of function blocks is characterized by being an error correction coder block, which inputs transmission data for coding as input data, performs error correction coding as the signal processing, and outputs a coded data series as output data.

The signal processor is characterized by being designed for a mobile communication system, and one of the plurality of function blocks is characterized by being a modulator block, which inputs a coded data series as input data, performs modulation as the signal processing, and outputs modulated transmission data as output data.

The signal processor is characterized by being designed for a mobile communication system, and one of the plurality of function blocks is characterized by being a demodulator block, which inputs received modulated data as input data, performs demodulation as the signal processing, and outputs a demodulated data series as output data.

The signal processor is characterized by being designed for a mobile communication system, and one of the plurality of function blocks is characterized by being an error correction decoder block, which inputs a decoded data series as input data, performs error bit correction as the signal processing, and outputs decoded data as output data.

The signal processor is characterized by further including a selection multiplex output block for acquiring an instruction from an outside, selecting the debug information based on the instruction acquired, inputting the debug information selected via the dedicated output path, and outputting the debug information inputted to the outside.

The selection multiplex output block is characterized by selecting multiple pieces of debug information based on the instruction, inputs the multiple pieces of debug information, multiplexes the multiple pieces of debug information, and outputs multiplexed debug information to the outside.

The multiple pieces of debug information are characterized by being acquired from different function blocks.

The selection multiplex output block is characterized by performing time multiplexing.

The debug information is characterized by being added with time information.

The time information is characterized by being added by a function block.

The time information is characterized by including a plurality of frame counters of different cycles.

The plurality of frame counters is characterized by including CFN (Connection Frame Number Counter) and BFN (Node B Frame Number Counter).

### Brief Description of the Drawings

Fig. 1 is a block diagram illustrating the configuration of a signal processor for a mobile communication system according to a first embodiment.

Fig. 2 is a diagram showing an example of the state of output in the case where a single piece of debug information is output from an arbitrary function block.

Fig. 3 is a diagram showing an example of the state of multiplex output in the case where multiple pieces of debug information are output from an arbitrary function block.

Fig. 4 is a diagram showing an example of the state of output in the case where a single piece of debug information including input data and/or output data is output from an arbitrary function block, when the debug information is added with time information.

Fig. 5 is a diagram showing an example of the state of multiplex output in the case where multiple pieces of debug information are output from one or more arbitrary function blocks, when the debug information is added with time information.

Fig. 6 is a diagram illustrating an automation algorithm for specifying a failure factor using a debugger.

Fig. 7 is a diagram showing the configuration of a conventional signal processor.

### Best Mode for Carrying out the Invention

### Embodiment 1.

A first embodiment will now be discussed with reference to the figures.

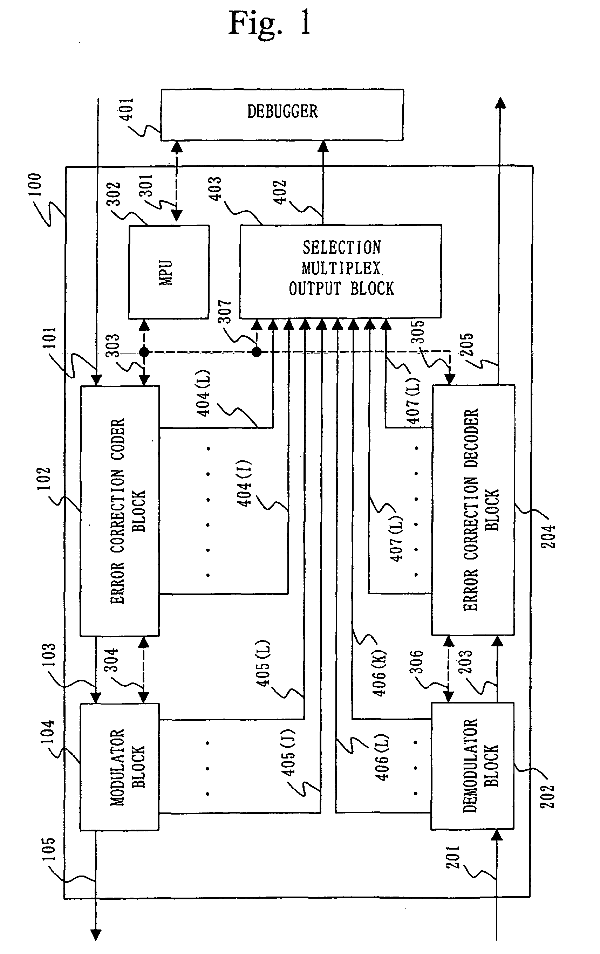

Fig. 1 is a block diagram of the configuration of a signal processor for a mobile communication system according to the first embodiment.

A reference numeral 100 denotes a signal processor for a mobile communication system. The signal processor 1000 is configured with a transmitter block and a receiver block.

The transmitter block has an error correction coder block 102 and a modulator block 104.

The error correction coder block 102 performs error correction coding, which is the signal processing that allows correcting an error bit produced in wireless transmission, for transmission data 101 for coding as the input data. The error correction coder block 102 outputs a coded data series 103. Error bit correction is necessary for improving line quality in wireless transmission.

The modulator block 104 modulates the coded data series 103 as the input data so as to convert the coded data series 103 and obtain modulated transmission data 105. The modulator block 104 then outputs the modulated transmission data 105. The modulated transmission data 105 is transmitted via a wireless transmission channel. Modulation is implemented to reduce the interference effect of jamming or change of transmission channel.

The receiver block has a demodulator block 202 and an error correction decoder block 204.

The demodulator block 202 demodulates received modulated data 201, which is received via the wireless transmission channel, as the input data so as to convert the received modulated data 201 to obtain a demodulated data series 203. The demodulator block 202 then outputs the demodulated data series 203. Demodulation, which is an inverse transform process of modulation, is a data restoration process.

The error correction decoder block 204 performs error correction decoding for the demodulated data series 203 as the input data so as to correct an error bit produced by deterioration in line quality in wireless transmission. The error correction decoder block 204 then outputs decoded data 205 that is obtained through the correction.

The error correction coder block 102, the modulator block 104, the demodulator block 202, and the error correction decoder block 204 are configured as function blocks. Those function blocks include devices such as DSP (Digital Signal Processor), LSI (Large Scale Integration), and FPGA (Field Programmable Gate Array). Also, those function blocks operate in various operation modes when controlled by MPU (Micro Processing Block) 302.

For example, with a CDMA (Code Division Multiple Access) based signal processor, wireless channel information about such as spreading code is transmitted to the modulator block 104 and the demodulator block 202 as the operation modes. Also with the coding system, if the mobile communication system is based both on convolution coding and Turbo coding, information about such as coding system and coding rate is transmitted to the error correction coder block 102 and the error correction decoder block 204 as the operation modes.

An explanation will be given of paths for transmitting the information. If the transmission is made from an MPU 302 to the error correction coder block 102, an input/output signal line 303 is used. If the transmission is made from the MPU 302 to the error correction decoder block 204, an input/output signal line 305 is used. If an operation mode is transmitted from the MPU 302 to the modulator block 104, then the input/output signal line 303, the error correction coder block 102 and the input/output signal line 304 are used. If an operation mode is transmitted from the MPU 302 to the demodulator block 202, then the input/output signal line 305, the error correction decoder block 204, and an input/output signal line 306 are used.

A description will now be given of the signal lines for transmitting debug information that is acquired from each function block. The signal lines are an example of a dedicated output path, or these signal lines transmit the debug information serially.

Signal lines 404(1)~404(I)(where the suffix I is a positive integer 2 or more) transmit the input data and output data of the error correction coder block 102 as the debug information. With this example, it is assumed that the error correction coder block 102 as a function block has a plurality of sub-function blocks. Each signal line is connected to each sub-function block.

Signal lines 405(1)~405(J)(where the suffix J is a positive integer 2 or more) transmit the input data and output data of the modulator block 104 as the debug information. With this example, it is assumed that the modulator block 104 as a function block has a plurality of sub-function blocks. Each signal line is connected to each sub-function block.

Signal lines 406(1)~406(K)(where the suffix K is a positive integer 2 or more) transmit the input data and output data of the demodulator block 202 as the debug information. With this example, it is assumed that the demodulator block 202 as a function block has a plurality of sub-function blocks. Each signal line is connected to each sub-function block.

Signal lines 407(1)~407(L)(where the suffix L is a positive integer 2 or more) transmit the input data and output data of the error correction decoder block 407 as the debug information. With this example, it is assumed that the error correction decoder block 407 as a function block has a plurality of sub-function blocks. Each signal line is connected to each sub-function block.

The signal lines 404(1)~404(I), 405(1)~405(J), 406(1)~406(K), and 407(1)~407(L) connected to the respective function blocks are connected to the selection multiplex output block 403. These signal lines can output the debug information including the input data and output data of an arbitrary function block to the selection multiplex output block 403.

The selection multiplex output block 403 is controlled by the MPU 302 via the input/output signal line 307. Through this control, an instruction from an outside is transferred to the selection multiplex output block 403. Upon acquisition of the instruction from the outside, the selection multiplex output block 403 selects one or more items of input data and/or output data outputted by a function block arbitrarily specified as the debug information according to this instruction. The selection multiplex outputs block 403 also inputs selected debug information through the signal lines (1)~404(I), 405(1)~405(J), 406(1)~406(K), and 407(1)~407(L). Then, the selection multiplex output block 403 can output the input debug information outside the signal processor via a selection multiplex output signal line 402.

Also, an instruction to output the debug information including the input data and/or output data of an arbitrary function block can be given from outside the signal processor to the MPU 302 via the input/output signal line 301 connected to the MPU 3020. As aforementioned, the selection multiplex output block 403 can operate according to this instruction. A debugger 401, for example, is externally connected to the signal processor.

Thus, according to this embodiment, the signal lines 404(1)~404(I), 405(1)~405(J), 406(1)~406, and 407(1)~407(L) connected to the respective function blocks are provided as the dedicated output paths for outputting the debug information acquired from the respective function blocks outside the signal processor.

This allows a large amount of information required for debugging to be outputted regardless of a limited amount of a memory provided inside or outside a function block. In other words, it is allowed to continue to output the debug information in an arbitrary length (size) including input data and/or output data to the outside of the signal processor serially from an arbitrary function block.

Hence, the problem of insufficient information for debugging can be solved.

In addition, according to this embodiment, the selection multiplex output block 403 including a select function and a time multiplex function is provided as an outlet for outputting the debug information outside the signal processor.

This select function allows a fixed number of the signal lines for interfacing with the outside of the signal processor, regardless of the number of the signal lines 404(1)~404(I), 405(1)~405(J), 406(1)~406(K), and 407(1)~407(L) connected to the respective function blocks. In addition, this time multiplex function allows upholding the fixed number of signal lines for interfacing with the outside of the signal processor even in the case where the multiple pieces of debug information are output from one or more arbitrary function blocks.

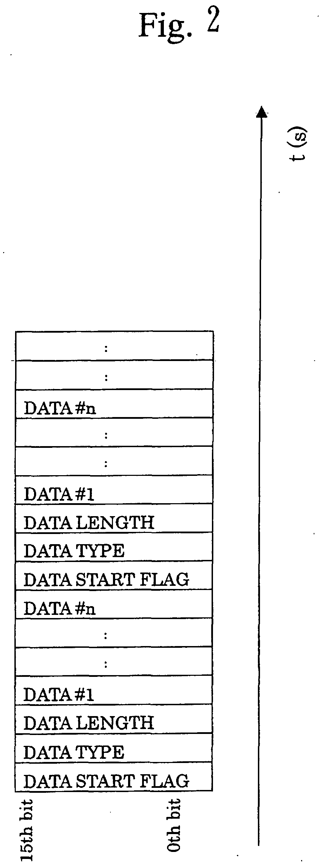

Fig. 2 is a diagram showing an example of the state of output in the case where a single piece of debug information is output from an arbitrary function block.

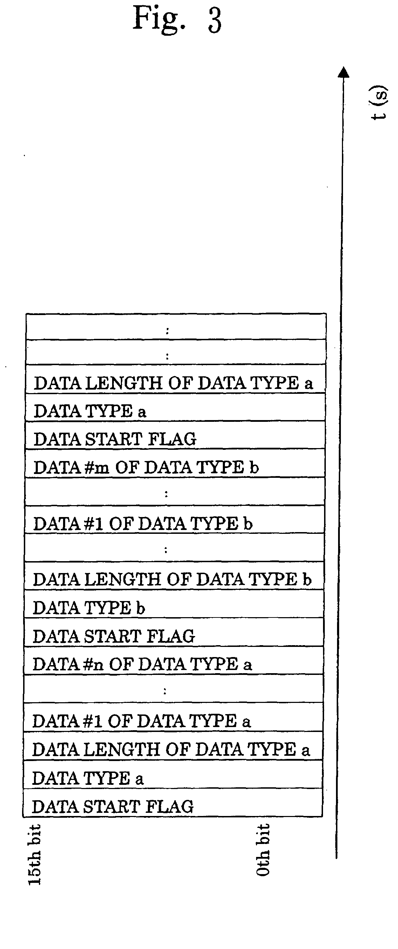

Fig. 3 is a diagram showing an example of the state of multiplex output in the case where multiple pieces of debug information are output from an arbitrary function block. With this example, the debug information is assumed 16 bits. The debug information, as shown in the figure, includes a data start flag and a data length. The data start flag indicates a delimiter for the debug information, and the data length indicates the data length of subsequent debug information, data #1~data #n (or data #1~data #m). Also, with this example, two pieces of debug information are time multiplexed. Hence, debug information a and debug information b shall be outputted alternately and serially. Those pieces of debug information may be acquired from different function blocks from each other.

### Embodiment 2.

A second embodiment will now be discussed with reference to the figures.

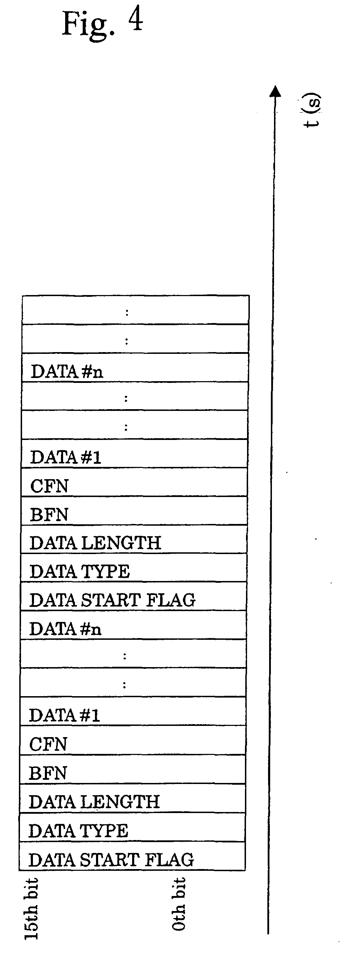

Fig. 4 is a diagram showing an example of the state of output in the case where a single piece of debug information including input data and/or output data is output from an arbitrary function block, when the debug information is added with time information. The time information is added to the debug information in the arbitrary function block.

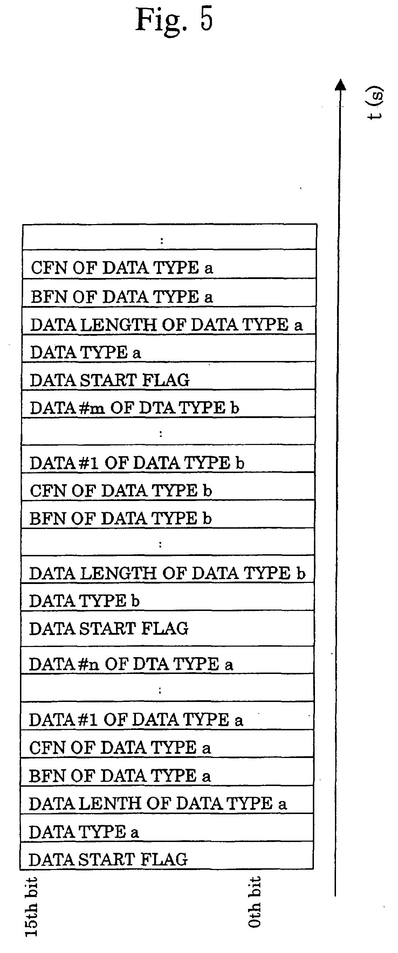

Fig. 5 is a diagram showing an example of the state of multiplex output in the case where multiple pieces of debug information are output from one or more arbitrary function blocks, when the debug information is added with time information. This addition is performed in the arbitrary function blocks as well.

With the examples of Fig. 4 and Fig. 5, the debug information is assumed 16 bits. The debug information, as shown in the figures, includes a data start flag and a data length. The data start flag indicates a delimiter for the debug information, and the data length indicates the data length of subsequent debug information, data #1~data #n (or data #1~data #m).

Fig. 5 shows an example in which two pieces of debug information are time multiplexed. Hence debug information a and debug information b both in an arbitrary length (size) are outputted alternately and serially.

With further reference to Fig. 4 and Fig. 5, the examples are both based on the assumption that the signal processor is designed for a mobile communication system based on the W-CDMA system prescribed by 3GPP(Third Generation Partnership Project). Based on this assumption, the debug information is added with CFN (Connection Frame Number Counter) and BFN(Node B Frame Number Counter) both as the time information. CFN is a frame counter of 0~255, and BFN is a frame counter of 0~4095.

With the W-CDMA system prescribed in 3GPP, CFN is used for synchronization between UE (User Equipment) and UTRAN (UMTS Terrestrial Radio Access Network). According to the timing of CFN, the operation mode of the signal processor changes. Then, corresponding to this change of the operation mode, a failure is assumed to occur.

With a system that operates by the unit of time of a cycle represented by eight bits like CFN mentioned above, if the debug information is added with time information (BFN represented by 12 bits) by the unit of time of a longer cycle, it can be determined the number of cycles of CFN timing after the issuance of the change order of the operation mode to an arbitrary function block from the MPU302. Hence, the accuracy of time information improves.

### Embodiment 3.

A third embodiment of the present invention will now be discussed with reference to the figures. With the third embodiment, a description will be given of the case where a signal processor having the functions discussed in the first or second embodiment is combined with the debugger 401 of Fig. 1. Combining with the debugger 401 has the effect that a failure factor can be automatically specified.

The debugger of Fig. 1 has the function of instructing the MPU 302 to output the debug information to an arbitrary function block via the input/output signal line 301. The MPU 302, based on this instruction, controls the selection multiplex output block 403 via the input/output signal line 307. Also, the debugger has the function of retrieving debug information that is outputted as a result of the control via the selection multiplex output signal line 402.

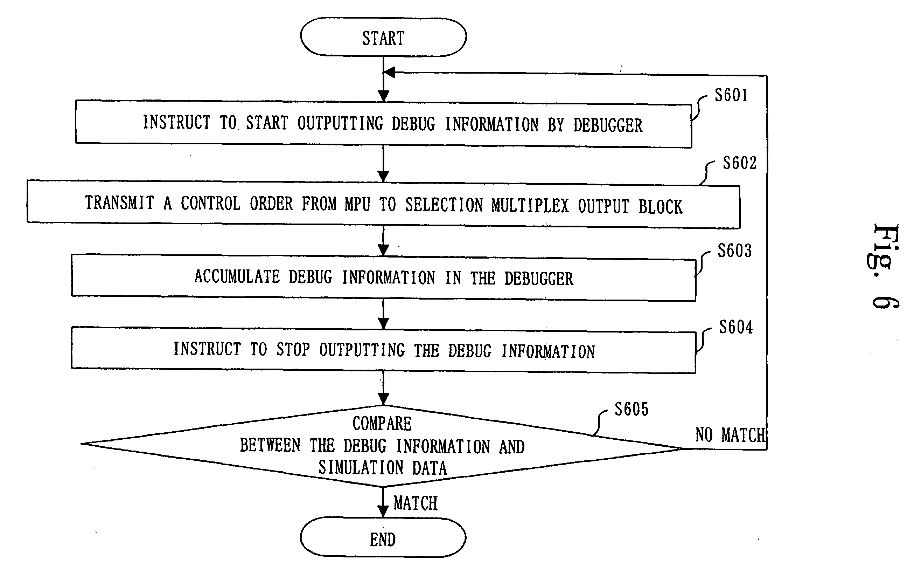

Fig. 6 is a diagram illustrating an automation algorithm using a debugger for specifying a failure factor. More particularly, this algorithm is used to specify a function block having a failure factor and to specify the timing thereof.

With S601, the debugger (401) outputs an instruction to the MPU (302) to start outputting debug information to an arbitrary function block via the input/output signal line 301, and then a memory write is performed of the instruction. Note, however, if the current process is processed for a second time or more, then the instruction to start outputting the debug information is sent to a function block that has not been subjected to 605 judgement.

With S602, the MPU (302) transmits to the selection multiplex output block (403) via the input/output signal line 307 a control order indicating which of the signal lines 404(1)~404(I), 405(1)~405(J), 406(1)~406(K), and 407(1)~407(L) connected to the respective function blocks, is selected, and indicating whether or not data output is with time multiplex.

With S603, the debugger (401) receives debug information outputted from the signal processor (100) via the selection multiplex output signal line 402, and writes it in an internal memory of the debugger (401).

With S604, the debugger (401) outputs an instruction to the MPU (302) to stop outputting the debug information to the arbitrary function block via the input/output signal line 301, and a memory write is performed of the instruction.

With S605, a comparison is made of the debug information outputted by the signal processor (100) including the input data and/or output data of the arbitrary function block with prepared simulation data. If they match, the process proceeds for another function block. If they do not match, the failure factor is specified and the process ends.

### Industrial Applicability

With reference to the examples discussed above, the dedicated output paths are thus provided for transmitting the debug information acquired from the function blocks serially. Hence, the debug information required may be obtained independent of the memory capacity.

In addition, the debug information is thus multiplexed. Hence, the configuration of the interface with the outside may be simplified.

The time information is thus added to the debug information. Hence, the specification of the timing of a failure occurrence may be facilitated. In particular, the frame counters of a different cycle are added as the time information. Hence, the timing may be specified for a long range.

## Claims

1. A signal processor comprising:
(1) a plurality of function blocks for signal processing; and
(2) a dedicated output path for transmitting debug information for debugging for the signal processor obtained from each of the plurality of function blocks.

2. The signal processor according to claim 1, wherein the dedicated output path transmits the debug information serially.

3. The signal processor according to claim 1, wherein the debug information includes input data to at least one of the plurality of function blocks.

4. The signal processor according to claim 1, wherein the debug information includes output data from at least one of the plurality of function blocks.

5. The signal processor according to claim 1, wherein the debug information is data in an arbitrary length (size).

6. The signal processor according to claim 1, wherein the signal processor is designed for a mobile communication system, and
wherein one of the plurality of function blocks is an error correction coder block, which inputs transmission data for coding as input data, performs error correction coding as the signal processing, and outputs a coded data series as output data.

7. The signal processor according to claim 1, wherein the signal processor is designed for a mobile communication system, and
wherein one of the plurality of function blocks is a modulator block, which inputs a coded data series as input data, performs modulation as the signal processing, and outputs modulated transmission data as output data.

8. The signal processor according to claim 1, wherein the signal processor is designed for a mobile communication system, and
wherein one of the plurality of function blocks is a demodulator block, which inputs received modulated data as input data, performs demodulation as the signal processing, and outputs a demodulated data series as output data.

9. The signal processor according to claim 1, wherein the signal processor is designed for a mobile communication system, and
wherein one of the plurality of function blocks is an error correction decoder block, which inputs a decoded data series as input data, performs error bit correction as the signal processing, and outputs decoded data as output data.

10. The signal processor according to claim 1, further comprising:
a selection multiplex output block for acquiring an instruction from an outside, selecting the debug information based on the instruction acquired, inputting the debug information selected via the dedicated output path, and outputting the debug information inputted to the outside.

11. The signal processor according to claim 10, wherein the selection multiplex output block selects multiple pieces of debug information based on the instruction, inputs the multiple pieces of debug information, multiplexes the multiple pieces of debug information, and outputs multiplexed debug information to the outside.

12. The signal processor according to claim 11, wherein the multiple pieces of debug information are acquired from different function blocks.

13. The signal processor according to claim 10, wherein the selection multiplex output block performs time multiplexing.

14. The signal processor according to claim 1, wherein the debug information is added with time information.

15. The signal processor according to claim 14, wherein the time information is added by a function block.

16. The signal processor according to claim 15, wherein the time information includes a plurality of frame counters of different cycles.

17. The signal processor according to claim 16, wherein the plurality of frame counters includes CFN (Connection Frame Number Counter) and BFN (Node B Frame Number Counter).
